# EUROPEAN PATENT SPECIFICATION

(11) **EP 3 883 296 B1**
(45) Date of publication and mention of the grant of the patent: **14.12.2022**
(21) Application number: 20164362.4
(22) Date of filing: 19.03.2020
(51) Int. Cl.: H04W 36/00, H04W 36/38

(54) **SYSTEM AND METHOD FOR MOBILE NETWORKS FOR AN OPTIMAL APPLICATION SERVER SELECTION AND HANDOVER**
SYSTEM UND VERFAHREN FÜR MOBILE NETZWERKE FÜR EINE OPTIMALE ANWENDUNGSSERVERAUSWAHL UND -ÜBERGABE
SYSTÈME ET PROCÉDÉ POUR RÉSEAUX MOBILES PERMETTANT UNE SÉLECTION ET UN TRANSFERT OPTIMAL DES SERVEURS D'APPLICATION

(43) Date of publication of application: 22.09.2021
(73) Proprietor: Deutsche Telekom AG, 53113 Bonn (DE)
(72) Inventor: RASS, Jörg, 50859 Köln (DE); BRITSCH, Matthias, 53639 Königswinter (DE)
(74) Representative: Raible Deissler Lehmann Patentanwälte PartG mbB

(56) References cited:
- EP-A1- 3 373 523
- EP-A1- 3 409 044
- WO-A1-2019/129112
- "3rd Generation Partnership Project; Technical Specification Group Services and System Aspects; Study on enhancement of support for Edge Computing in 5G Core network (5GC) (Release 17)", 3GPP STANDARD; TECHNICAL REPORT; 3GPP TR 23.748, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. V0.3.0 3 February 2020 (2020-02-03), pages 1-40, XP051861023, Retrieved from the Internet: URL:ftp://ftp.3gpp.org/Specs/archive/23_se ries/23.748/23748-030.zip 23748-030_MCCclean.doc [retrieved on 2020-02-03]
- ERICSSON ET AL: "Comparison SIPTO@LN standalone GW and Solution #5", 3GPP DRAFT; S2-164277_WAS_163757_WAS_163319_WAS_162878 _WAS_162383_V2XARC_EVALUATION_LGW_B, 3RD GENERATION PARTNERSHIP PROJECT (3GPP), MOBILE COMPETENCE CENTRE ; 650, ROUTE DES LUCIOLES ; F-06921 SOPHI , vol. SA WG2, no. Vienna, Austria; 20160711 - 20160715 17 July 2016 (2016-07-17), XP051121899, Retrieved from the Internet: URL:http://www.3gpp.org/ftp/tsg_sa/WG2_Arc h/TSGS2_116_Vienna/Docs/ [retrieved on 2016-07-17]

## Description

The present invention provides a system and a method for a mobile network to determine a physical instance of an application server with optimal response time to an application in a user equipment according to MNO (Mobile Network Operator) information databases on a topology of the mobile network and network session data available for the user equipment in a network control plane of the mobile network, to provide from a mobile network trigger point support information to an application server on recommended application or application state movement to a new application server physical or virtual instance that has optimal application response times after change of a network mobility anchor and to trigger such application server handover together with handover information from the mobile network.

In the related art, publications proposing solutions for application mobility in mobile networks are mainly addressing the problem of applications on MEC (Multi-Access Edge Computing) server and MEC server handover. The related problem statements so far are characterized by MEC server deployments, where the MEC server is deployed on a user plane interface between access network devices and core network gateways. In such deployments, when a UE (User Equipment) is being handed over from a source access network device to a target access network device, the application context from the MEC server corresponding to the source access network device has to be handed over to the MEC server of the target access network device.

WO 2019/129112 A1 describes an application server switching method, a session management function (SMF), and a terminal device (UE). On the basis of a switched UPF and the corresponding relationship between the UPF and the addresses of local application servers in the mobile network, an SMF acquires the address of the local application server corresponding to the switched UPF; and the SMF sends the address of the local application server corresponding to the switched UPF to the respective UE. When the UPF corresponding to a local application server is switched, the UE can access the local application server corresponding to the destination UPF.

EP 3 409 044 B1 describes a method that includes detecting a handover that is requested by a user equipment. The user equipment moves from a first area of a first mobile-edge-computing (MEC) server to a second area of a second mobile-edge-computing server. The method requires determining whether the user equipment has an ongoing application session with the first mobile-edge-computing server. The method may also include determining whether the ongoing application session should be moved from the first mobile-edge-computing server to the second mobile-edge-computing server, if the user equipment has been determined to have an ongoing application session. The method may also include moving the ongoing application session from the first mobile-edge-computing server to the second mobile-edge-computing server, if the application session has been determined to be moved.

In WO 2019/011408 A1 the authors propose a handover of a MEC application procedure related to handing over a context (user context and/or application context) of the application for a terminal from one MEC platform to another MEC platform that is integrated in the mobility management procedures of the mobile network. This proposal can be characterized by the information exchange needed between the access network devices with the MEC server and the access network devices being involved in the "handover of the MEC application" procedure. Thus, enhancements for an interface between a base station and associated MEC platform and the interface between source and target base stations are consequently being proposed. By doing so the BTS (Base Transceiver Station) may optimize the handover to guarantee a seamless service by MEC applications across handovers. However, such procedure is only applicable to application context handover related to MEC server deployment scenarios, where the server is located between the access network device and the core network gateway. The MEC server needs to be integrated with the base stations via a dedicated interface and the handover procedure between BTS has to be enhanced in order to facilitate the application context handover.

In US 2018 / 0242204 A1 the authors propose another MEC platform handover method in which the access network devices and UE are involved in the handover procedure of the application state from one MEC server to another. The target MEC platform is selected according to a preset correspondence between a target access network device and a MEC platform. The envisaged MEC deployment scenario is further described by a MEC server being usually deployed on a user plane interface between an access network device and a core network access gateway. For a 4G deployment scenario it is referred to an access network device being an evolved base station node (eNodeB) and the core network access gateway may be a serving gateway (SGW). However, this handover method is only applicable to application context handover in which the application server is integrated into the proposed MEC handover method, in which also the access network devices and the UE have to be involved. The application server in this handover method has to comply to the network signaling procedures and messages being defined between the source and target MEC server and the access network devices and the UE.

It should be noted, that the above mentioned MEC deployment scenarios and related handover methods cannot be applied to state-of-the-art 3GPP home-routed roaming methodology, as in WO 2019/011408 A1 the server is located between the access network device and the core network gateway and the MEC handover method in US 2018/0242204 A1 is based on a preset correspondence between a target access network device and a MEC platform. This implies local access and integration of the MEC server with the RAN (Radio Network) in the visited PLMN (Public Land Mobile network) which is not possible via the currently standardized roaming interface.

Also, MEC server handover between MNOs in the same country according to WO 2019/011408 A1 would require a inter base station handover between two MNOs, in the method according to US 2018/0242204 A1 it would require at least an interworking of the network control plane procedures of the two MNOs, in addition to an PLMN re-selection procedure, that need to be performed by the UE.

With the knowledge of the network topology of the deployed AS (application server) base in an MNO's mobile network the UE (user equipment) can measure the response times of applications on a plurality of AS in the network. This is a common method in the related art, however this method only provides a snap shot of the given traffic situation in a mobile network at a given time. The measured times from UEs are less meaningful and their accuracy deteriorates over time, rather than network based closest AS metrics derived from network topology and latency analysis within an MNO's mobile network. The inaccuracy of this method becomes especially obvious for a plurality of MNOs in the same country. Also, continuous sensing of responses times to/from deployed AS in mobile networks from an UE is more demanding on UE and mobile network transmission resources than a method that does not involve the UE as part of the AS selection and application state transfer procedure.

The MEC application mobility feature is a work in progress in ETSI ISG MEC. In ETSI White Paper No. 28, "MEC in 5G networks", 1st edition, June 2018 it is also assumed, that the MEC server is deployed behind the Core Network Device. As in ETSI White Paper No. 28, "MEC in 5G networks", 1st edition, June 2018 the focus is on 5G, this corresponds to the N6 reference point. The procedures that are currently being developed are application mobility enablement, detection of UE movement, validation of application mobility, user context transfer and/or application instance relocation, and post-processing of application relocation. Concerning the aspect of application mobility, which is also addressed by the present invention, in ETSI White Paper No. 28, "MEC in 5G networks", 1st edition, June 2018 it is mentioned, that for application mobility it is required, that the application instance that is serving the user is changed to a new location. And consequently, for stateful applications, the user context also needs to be transferred. Application mobility for a stateful service requires transferring and synchronizing the service state between the original and relocated application instance in order to provide service continuity. The application must be designed in such a way that multiple instances of the application can run concurrently, and state (context) of the application instance can be captured in the source instance (also called in the following source application server) and copied to another instance (also called in the following target application server) independently from the operation of the instance itself.

Although these fundamental assumptions also are part of the foundations for the present invention, it is an object of the present invention to improve the related art on application mobility in mobile networks concerning network latencies. Several embodiments of the present invention relate to the latency-optimized selection of an application server and application state transfer to a closest application server for handover. This is an aspect of technological art currently not addressed in ETSI White Paper No. 28, "MEC in 5G networks", 1st edition, June 2018.

Some aspects of the present invention are mentioned as 3GPP study item, denominated as key issues "Discovery of Edge Application Server" and "Edge relocation" (see 3GPP SA2 study [FS_enh_EC], TR 23.748, "Study on enhancement of support for Edge Computing in the 5G Core network (5GC) (Release 17)", current draft version v0.3.0, Feb. 2020). It is mentioned, that before an application/UE starts to connect to the service, it is very important for the application/UE to discover the IP address of one suitable edge application server (e.g. the closest one), so that the traffic can be locally routed to the edge application server and service latency and traffic routing path can be optimized. It is further mentioned, that once a discovered edge application server becomes non-optimal (e.g. after the UE moves far away), a new edge application server may be discovered to replace the old one to serve the application/UE. The reselection of an edge application server can be triggered by a user plane change initiated by the network such as a mobility event (e.g. handover). These aspects are study items, discussion of solution proposal for the study items is work in progress at 3GPP. Some embodiments of the present invention relate to the problem statement and study item definitions in 3GPP SA2 study [FS_enh_EC], TR 23.748, "Study on enhancement of support for Edge Computing in the 5G Core network (5GC) (Release 17)", current draft version v0.3.0, Feb. 2020. The methods stipulated in these embodiments are improvements of the related art, as being laid down, as study items, in 3GPP SA2 study [FS_enh_EC], TR 23.748, "Study on enhancement of support for Edge Computing in the 5G Core network (5GC) (Release 17)", current draft version v0.3.0, Feb. 2020. Furthermore, many aspects of the current invention relate to network procedures outside of the Mobile Network Radio Network / Core Network Domain and extend the scope of the 3GPP SA2 study [FS_enh_EC], TR 23.748, "Study on enhancement of support for Edge Computing in the 5G Core network (5GC) (Release 17)", current draft version v0.3.0, Feb. 2020 beyond the mobile network domain to general data networking and distributed, cloud networking considerations.

Thus, it is an object of the present invention to improve the related art on application mobility in mobile networks concerning network latencies and response times.

To resolve the above mentioned object, the present invention provides a system with the features of the independent claim 1 and a method with the features of the independent claim 10. Further embodiments are described by the dependent claims and the following description.

The present invention provides a system for selecting, for a given user network session in a mobile network, an application server among a plurality of application servers in the mobile network, the mobile network including a user plane, a network control plane, and a network management plane. The system is installed and implemented between the network control plane and the plurality of application servers and comprises an apparatus comprising a computer platform and at least one data storage unit including a program code, wherein the apparatus comprises at least:
a) a communication interfaces unit which is configured to receive communication messages from and transmit communication messages to at least one application server of the plurality of applications servers and the network control plane of the mobile network,
b) an obtaining unit which is configured to retrieve a closest application server of the plurality of application servers from a network topology repository stored in the at least one data storage unit wherein the network topology repository stores respective network topology relationships between respective application servers and respective mobility anchors of the user plane wherein the closest application server is determined from the plurality of application servers on the basis of the respective network topology relationships between the respective application servers and a respectively current mobility anchor of the given user network session,
c) a determining unit which is configured to recognize a change of a relationship between the closest application server and the respectively current mobility anchor of the user network session in the user plane via the means of a network session repository stored in the at least one data storage unit, wherein the network session repository stores a relationship between an unambiguous user network session identifier and the closest application server, and, in the case of a change, to trigger an application server handover,
wherein the computer platform and the at least one data storage unit including the program code are arranged and interrelated with the apparatus to cause the apparatus to perform the functions of the obtaining unit and the determining unit, when the program code is executed by the computer platform.

The following is provided for illustrative purposes to enable a better understanding of the invention.

According to an example, the unambiguous user network session identifier is defined by a user network session address (UE_IP) and a mobility anchor identifier of the respectively current mobility anchor. According to another embodiment of the present invention, the user network session address UE-IP can be replaced by any information which enables a target application server t_AS or a source application server s_AS to identify network sessions and to correlate them to the UE's application state, e.g. hash values created over header or payload information or both, additional information obtained from the network such as DNN related information or information placed in the payload.

According to the 3GPP specification considering 5G, it might be possible that the mobile network issues a trigger information about a changed relationship between the mobile anchor, i.e. the user plane function UPF according to 5G, and the currently used application server due to an handover between a previously used mobile anchor and a currently used mobile anchor (also called inter-UPF handover) which is sent to the application servers. However, such information is just a necessary criterion but not a sufficient criterion for an application server handover. Such trigger information from the mobile network can be contained in the current invention in a new request for a closest application server from the mobile network.

The user plane, also called the data plane, carries the network user traffic. A plane, in a networking context, is one of three integral components of a telecommunications architecture. These three components are the data plane, the network control plane, and the network management plane. However, the proposed method according to the present invention is designed on top of the mobility management procedures of the mobile network and has no interaction with the network management plane. Non-Access Stratum (NAS) procedures of the mobile network control plane allow to reach user terminals (UEs) connected to the mobile network and to manage user network sessions. The information transferred in the NAS signalling procedures is processed by Core Network devices of the mobile network and further used for the implementation of the proposed method.

The computer platform or digital platform is an environment in which the program code is executed. The computer platform is the stage on which the computer program described by the program code can run. The computer platform can also be realized in the context of a virtualized execution environment, e.g. as virtual machine or containerized.

An application server in the sense of the present invention is any computing device located in the data network (DN) domain of a mobile network or reachable from there. The data network domain is e.g. denominated in the 3GPP specifications as LDN (4G) or DN (5G). The application server can be hosted by different MNOs or any third party connected to the involved MNOs by means of a data network. An application server typically hosts applications that have a data connection via the mobile network to UEs that are connected to the mobile network of one MNO. An application server hosted in a data network domain of a different MNO is either reachable via PLMN reselection procedure, as e.g. according to standard roaming procedures, or via MNO interconnection methods. The applications can be operated by MNOs or 3rd parties, e.g. Internet Cloud provider.

In contrast to the prior art, the present invention proposes a solution for application state transfer without the need of changes or enhancements in the mobility management procedures of the mobile network or the UE. The embodiments of the proposed method according to the present invention are all designed on top of the mobility management procedures of the mobile network.

Further, there is no need to integrate the application server with the network access devices or the UE and comply to the specific network signaling and message exchange procedures defined therefore.

To enable optimized application mobility also for state-of-the-art 3GPP standardized roaming cases, the application server can be placed in the visited PLMN together with local breakout of the UE data traffic towards the application server, as well as home-routing of the data traffic from the UE in the visited PLMN to an application server and application state transfer towards another application server in the home PLMN is also possible.

With the system and method, mobility can also be supported in multi MNO, non 3GPP standardized roaming cases. The AS of another MNO, that has been determined as part of some embodiments of the present invention as the closest AS for the application state transfer, can either be reached by the UE through performing a PLMN re-selection and an application state transfer to/from the application server operated or hosted in the DN (Data Network) domain of the other national MNO or through direct user plane traffic routing of UE data traffic from the new core network device mobility anchor in the UE's home network to the new, closest AS in the other MNO's network. This would require interconnection agreements between the involved MNOs and connecting the system and apparatus of the present invention via the proposed interfacing method to the control plane network devices of the interconnected MNOs, but without the necessity of interworking of the 3GPP defined network control plane procedures of the two MNOs, e.g. eliminating especially the need of coordinated multi MNO network mobility procedures.

The computer platform, the program code stored in the at least one data storage unit and the apparatus which are interrelated with each other as described herein, realize, i. e. form a new instance which operates on the application layer and the control plane of a mobile network. Such new instance is referred to in the following as information server (InfSrv). The information server is a kind of communication peer of the application server(s) on the application layer. The information server is installed and implemented between the mobile network control plane and the plurality of application servers. The information server is enabled to gather via the communication interfaces unit MNO unique network context information about the application servers, particularly about the application server which is currently involved in the given user network session, and about topology information and the reach of core network devices in terms of their latencies and response times concerning the data path of the given user network session. Thus, the information server allows to select the currently closest application server for a mobile network user network session request and to direct the user plane traffic of the given user network session to the closest application server, e.g. to the latency-optimal application server.

The closest application server in the sense of the selection of the optimal application server, i.e. ensuring optimal network characteristics between the application server and a user plane core network device (CND-U), i.e. a respectively current mobility anchor (MA) associated with the user plane core network device in the user plane is used only as one example in the present disclosure to describe the general method. However, the scope of the present invention is not limited to that specific example. A person of ordinary skill in the art can derive without creative efforts, how other network connectivity characteristics of an application server, such as bandwidth, QoS (Quality of Service) requirements and specific software or hardware resources or other characteristics or any combination thereof which make the application server specifically suited for the given user network session's demands are possible entries of the network topology repository and can be used as selection criteria for the information server to obtain the respective closest application server.

In the following, an example of latency optimization is described for selecting the closest application server, i.e. that application server which ensures an optimal latency between the application server and the user plane core network device is designated as the closest application server.

According to one example, the application server handover which can be triggered by the determining unit comprises an application state transfer from a source application server of the plurality of application servers to a target application server of the plurality of application servers and/or a relocation of a respective application from the source application server to the target application server. Such relocation of an application and/or a transfer of an application state can be necessary due to a change of the mobility anchor of the user network session which can be induced by handover situations in the mobile network, combined with a change of the closest application server. However, it is to be stated that a change of the mobility anchor is not necessarily combined with a change of the closest application server. But only when both criteria are fulfilled, i.e. when a change of the mobility anchor is combined with a change of the closest application server an application server handover as described above needs to be triggered and executed. A change of the closest application server is recognized by the determining unit on the basis of a change of the relationship between the closest application server and the respectively current mobility anchor. A change of the relationship between the closest application server and the respectively current mobility anchor is given when a handover from an old mobility anchor to a new mobility anchor takes place and the old mobility anchor is assigned to another closest application server than the new mobility anchor. Such assignments, i.e. network topology relationships are stored in the network topology repository.

The mobility anchor is a network function in the user plane of the mobile network, where the user network session which is managed by a network control plane function in the core network domain is terminated. The standardized mobility management functionality of a mobile network according to 3GPP specifications covers the access and core network devices of the radio network and core network domain, and the necessary interactions with the UE concerning the user network session. Any user plane traffic forwarded to e.g. an application server beyond the mobility anchor is not included into the mobility management functionality of the mobile network. As a result of this, an originally selected application server with optimal response time to an application in the UE might not be latency-optimal anymore when the UE moved and the session management function of the network control plane, implemented in a core network device of the network control plane (CND-C: Core Network Device of the Network control plane) has selected a new core network device in the user plane (CND-U: User plane Core Network Device) as new mobility anchor (MA) for the given user network session. In this case, the network control plane, i.e. the CND-C might send a request for a new closest application server to the information server. Therefore, according to a further aspect of the present invention, the apparatus is configured to receive a request for a closest application server from the network control plane via the communication interfaces unit and to return an identifier of the closest application server as parameter of a response message to the CND-C of the mobile network via the communication interfaces unit wherein the identifier of the closest application server, in the following also called AS-Id, is retrieved from the network topology repository and wherein the request for the closest application server comprises a user network session address (UE_IP) and a mobility anchor identifier (MA-Id) of a respectively current mobility anchor of the given user network session as network context of the user network session, and a unique equipment identifier of the user plane core network device (CND-U-Id) associated with the mobility anchor.

According to a further example, the respectively current mobility anchor of the given user network session is identified via a mobility anchor identifier (MA-Id) according to the 3GPP specifications which is used by the obtaining unit, together with the CND-U-Id as unambiguous search identifier in the network topology repository to retrieve an identifier of the closest application server and, therefore, to identify the closest application server itself.

According to still a further example, the apparatus is further configured to determine, using the determining unit, for the given user network session, identified by a user network session address (UE_IP) and the mobility anchor identifier (MA-Id) of the respectively current mobility anchor of the given user network session, whether there is already an entry in the network session repository. If there is no entry in the network session repository for the given user network session, the apparatus is further configured to initially create a new entry in the network session repository which holds a relationship between the user network session identifier defined by the user network session address (UE_IP) and the mobility anchor identifier (MA-Id) of the respectively current mobility anchor of the given user network session, and a respectively current closest application server AS identified by an application server identifier (AS-Id), such relationship being designated as: (UE_IP, MA-Id) ↔ AS-Id or (UE_IP, MA-Id) ↔ AS relation.

In the case that there exists already an entry in the network session repository for the given user network session and that the given user network session is actually being modified caused by a handover situation with change of mobility anchor in the mobile network, the apparatus is configured to recognize whether there is a change of the relationship between the closest application server and the new mobility anchor and, in the case of a change, to update the existing entry into an updated new entry with a new relationship between the user network session identifier defined by the user network session address (UE_IP) and the new mobility anchor identifier (MA-Id) with the respectively current closest application server AS identified by an application server identifier such relationship being designated as: UE_IP, MA-Id ↔ AS-Id or (UE_IP, MA-Id) ↔ AS relation.

Thus, the apparatus is configured to determine, using the determining unit, whether for the given user network session identified by the user network session identifier defined by the user network session address (UE_IP) and the new mobility anchor identifier (MA-Id), the closest application server obtained from the network topology repository is different from the existing entry of the closest application server as source application server in the network session repository, and to obtain an application server identifier of the closest application server from the updated new entry in the network session repository as target application server for the application server handover and to take the application server identifier (AS-Id) of the target application server as trigger to construct a communication message to be conveyed via the communication interfaces unit to inform the source application server that a handover of application or application state to the target application server is recommended.

Thus, a new target application server (t_AS) can be selected, which has better response times to the UE application than the old (source) application server (s_AS) when connected to the new mobility anchor. However, the source application server (s_AS) is not aware of the change of the mobility anchor (MA) by the mobility function of the mobile network. The UE also does not recognize any change of CND-U and MA in the mobile network. The s_AS thus needs to be triggered from a mobile network trigger point to perform an application state transfer to the t_AS or to relocate the application from s_AS to t_AS or do both. It is proposed by the present invention, that this task can be taken over by the information server (InfSrv) via the above mentioned communication message, wherein the information server gets information or is being informed beforehand by the session management function associated with the core network device of the network control plane (CND-C) about any CND-U change of the given user network session (also called UE network session), e.g. via the mobile network request for a closest application server as mentioned above.

It is also part of an example to solve the problem of relocating the application of the application server s_AS (source application server) or to transfer the application state to another application server t_AS (target application server) and to provide the t_AS, via data exchange with the s_AS and network context information from the information server, with the necessary user network session address (UE_IP) to map the incoming user plane traffic - after network handover to the new CND-U/MA - to the relocated application or application state at the t_AS.

Therefore, the apparatus is configured to trigger, using the determining unit, an application server handover from the source application server to the target application server by sending the constructed communication message via the communication interfaces unit to the source application server, the communication message having a message format defined for an application server handover trigger message.

Furthermore, the apparatus can also be configured to receive via the communication interfaces unit a request to be informed about recommended application server handover from the source application server and to send in return via the communication interfaces unit handover information and details of the target application server to the source application server.

According to a further aspect of the present invention, there is provided a method for selecting, for a given user network session in a mobile network, an application server among a plurality of application servers in the mobile network, the mobile network including a user plane, a network control plane, and a network management plane, wherein the method comprises at least:
A) providing an apparatus, a computer platform and a data storage unit including a program code, wherein the apparatus, the computer platform and the program code form an information server that is installed and implemented between the network control plane and the plurality of application servers, wherein:
   1) a communication interfaces unit receives communication messages from and transmits communication messages to at least one application server of the plurality of applications servers and/or the network control plane of the mobile network,
   2) an obtaining unit retrieves a closest application server of the plurality of application servers from a network topology repository stored in the at least one data storage unit wherein the network topology repository stores respective network topology relationships between respective application servers and respective mobility anchors of the user plane wherein the closest application server is determined from the plurality of application servers on the basis of the respective network topology relationships between the respective application servers and a respectively current mobility anchor of the given user network session,
   3) a determining unit recognizes a change of the relationship between the closest application server and the respectively current mobility anchor of the user network session in the user plane via the means of a network session repository stored in the at least one data storage unit, wherein the network session repository stores a relationship between an unambiguous user network session identifier and the closest application server, and, in the case of a change, triggers an application server handover,
wherein the computer platform and the at least one data storage unit including the program code are arranged and interrelated with the apparatus to cause the apparatus to perform the functions of the obtaining unit and the determining unit, when the program code is executed by the computer platform.

The unambiguous user network session identifier can be defined by a user network session address (UE_IP) and a mobility anchor identifier of the respectively current mobility anchor.

There is provided a communication method for the network control plane, more precisely for a core network device of the network control plane (CND-C), to provide a network context of a given user network session, identified by a user network session address (UE_IP) and a mobility anchor identifier (MA-Id) and a unique equipment identifier of a core network device of the user plane, designated as CND-U-Id, to the information server, and to obtain the closest application server in return. The method includes the following steps:
- the CND-C obtains the network context of the given user network session from the mobile network and embeds the UE_IP, MA-Id and CND-U-Id into a communication message defined for the network request for the closest application server from CND-C on a CND-C / InfSrv interface, i.e. using the communication interfaces unit of the apparatus. The CND-C sends the constructed communication message via the CND-C/InfSrv interface to the information server.

- The InfSrv receives the CND-C request and determines the closest AS, as being described hereinafter.
- The InfSrv returns the identifier of the closest application server (AS-Id) as parameter of the response message defined on the CND-C / InfSrv interface. The identifier of the closest application server is chosen according to the related art, e.g. as URL/URN (URI), FQDN or IP address.

The user network session address (UE_IP), the mobility anchor identifier (MA-Id) and the equipment identifier of the user plane network node associated with the mobility anchor, also designated as CND-U-Id, can be chosen according to 3GPP specifications, being e.g. defined information elements of a mobile core network, e.g. as Information Elements (IE) "Node ID" and "Created Traffic Endpoint" as being specified by 3GPP TS 29.244 as 5G network communication parameter between a UPF, here CND-U, and a SMF, here CND-C. A person of ordinary skill in the art can derive without creative efforts how the CND-U-Id and MA-Id can be chosen in accordance with e.g. 3GPP 4G network communication parameter definitions at the network CND-U and CND-C interface.

The UE_IP address is the UE source IP address visible and used for routing on the external CND-U interface data path towards the application server. For a 5G network the core network communication parameter "Created Traffic Endpoint" and "Node ID", as e.g. being specified by 3GPP TS 29.244, correspond to the mobility anchor identifier (MA-Id) and the equipment identifier of the user plane network device (CND-U-Id) of the present invention.

A person of ordinary skill in the art can derive without creative efforts how the CND-U-Id and MA-Id can be chosen in accordance with e.g. the 3GPP 4G network communication parameter definitions at the CND-U / CND-C interface of a mobile network.

According to the present invention, the method further comprises the following steps:
B) obtaining via the network control plane a user network session address and a mobility anchor identifier of a respectively current mobility anchor for the given user network session as network context of the user network session, and a unique equipment identifier of the user plane network device associated with the mobility anchor,
C) embedding at the mobile network control plane the user network session address and the mobility anchor identifier and the unique equipment identifier into a communication message defined for a network request for a closest application server,
D) sending the request for the closest application server to the apparatus,
E) receiving at the apparatus the request for the closest application server from the network control plane via the communication interfaces unit,
F) returning an identifier of the closest application server as parameter of a response message to the network control plane via the communication interfaces unit wherein the identifier of the closest application server is retrieved from the network topology repository.

The information server as described before is a separate system which is accessible via its communication interfaces unit and a respective interface to the network control plane. Alternatively, it may be an integral part of the network control plane, i.e. it may be implemented in the network control plane.

According to still a further aspect, the method further comprises:
G) determining, using the determining unit, whether for the given user network session identified by the user network session address and the respectively current mobility anchor identifier, the closest application server obtained from the network topology repository is different from an existing entry of the closest application server as source application server in the network session repository,
H) obtaining an application server identifier of the closest application server from an updated new entry in the network session repository as target application server for the application server handover, and
I) constructing, triggered by the application server ID of the target application server, a communication message to be conveyed via the communication interfaces unit to inform the source application server that a handover of application or application state to the target application server is recommended,
J) sending the constructed communication message together with handover information and details of the target application server to the source application server via the communication interfaces unit.

According to still another example, the method further comprises:
K) receiving at the source application server the application handover message via respective communication interfaces and constructing and sending a communication message to the target application server to inform the target application server that a handover from the source application server is going to be performed. In case of an application state handover the application state for the user network session is102-1 retrieved via the user network session IP address and embedded as conveyable information element into the communication message to the target application server.

The present invention also refers to a computer program product comprising a set of instructions which, when executed on at least one computing device, is configured to cause the at least one computing device to carry out at least one embodiment of the method as described before.

The computer program product may be embodied as a computer-readable medium or directly loaded into at least one computer, wherein parts of the program can be executed by hardware comprised in the at least one computer. The terms "computer" and "computing device" are used synonymously herein. Further, the computer platform described herein comprises at least one computing device.

Further aspects of the invention will be realized and attained by means of the elements and combinations particularly depicted in the appended claims. The figures are described in a cross-figure manner, identical reference signs indicate identical components.

### Brief description of the drawings

Figure 1 gives an overview of the essential components involved in carrying out an embodiment of the method according to the present invention.
Figure 2 illustrates an embodiment of the method according to the present invention.
Figure 3 illustrates an embodiment of the system according to the present invention.
Figure 4 illustrates a further embodiment of the method.
Figure 5 illustrates a further embodiment of the method.
Figure 6 illustrates a further embodiment of the method .
Figure 7 illustrates a further embodiment of the method .

### Detailed description of the drawings

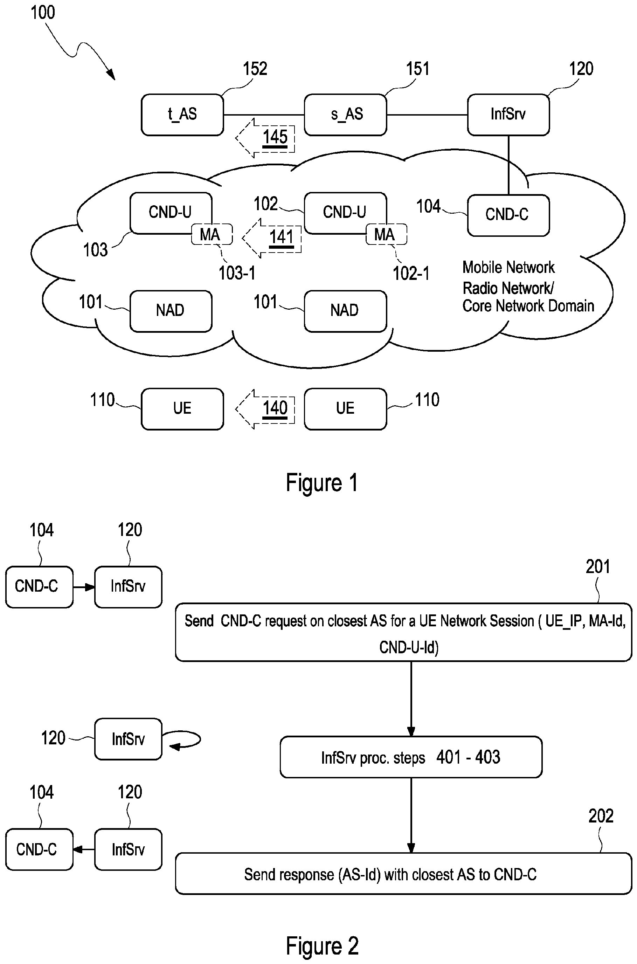

In the following, the invention is described with reference to figures 1 to 3, while the description of the other figures is provided for illustrative purposes to enable a better understanding of the invention.

Figure 1 gives an overview of a mobile network with the essential components involved in carrying out an embodiment of the method according to the present invention. The mobile network 100 which comprises a radio network and a core network domain is shown as a cloud. The mobile network 100 comprises a plurality of network access devices NAD 101 which are used to allow a user, i.e. a user equipment UE 110 to access the mobile network 100. Each network access device 101 is in communicative connection with a core network device of the user plane CND-U 102, 103, particularly with a mobility anchor MA 102-1, 103-1, respectively. Each mobility anchor 102_1, 103-1 represents a network function in the user plane of the mobile network 100, where a user network session which is managed by a core network device of the network control plane CND-C 104 in the core network domain is terminated. The mobile network further comprises a network management plane, not shown here, that configures, monitors, and provides management, monitoring and configuration services to all parts of the network.

The core network device of the network control plane CND-C 104 is in communicative connection with a information server InfSrv 120 which is installed between the network control plane, i.e. the core network device of the network control plane CND-C 104 and a plurality of application servers 151, 152. Any user plane traffic forwarded to an application server 151, 152 beyond the respective mobility anchor 102-1, 103-1 is not included into the mobility management functionality of the mobile network. As a result of this, an originally selected application server 151, also called source application server s_AS with optimal response time to an application in the UE 110 as long as the UE data traffic is routed via the original assigned core network device of the user plane 102, i.e. associated with the mobility anchor 102-1, might not be latency-optimal anymore when the UE 110 moved, as indicated by arrow 140, and the session management function of the network control plane CND-C 104 has selected in the user plane a new core network device CND-U 103 associated with a new mobility anchor MA 103-1 for the user network session. In this case, a new target application server t_AS 152 can be selected, which has better response times to the UE 110 application than the old application server s_AS 151 when connected to the new mobility anchor 103-1. However, the source application server s_AS 151 is not aware of the change of the mobility anchor from MA 102-1 to MA 103-1, as indicated by arrow 141, by the mobility function of the mobile network 100. The UE 110 also does not recognize any change of CND-U and MA in the mobile network 100. The s_AS 151 thus needs to be triggered from a mobile network trigger point to perform an application state transfer to the t_AS 152 or to relocate the application from s_AS 151 to t_AS 152 or do both. It is proposed by the current invention, that this task is taken over by the information server InfSrv 120, being informed by the session management function associated with the control plane network device CND-C 104 about any CND-U change of a given UE network session.

It is also part of the proposed solution of the current invention to solve the problem of relocating the application of the application server s_AS 151 or of transferring the application state to another application server t_AS 152, as indicated by arrow 145 and to provide the t_AS 152, via data exchange with the s_AS 151 and network context information from the information server InfSrv 120, with a necessary user session network address to map the incoming user plane traffic - after network handover to the new CND-U/MA 103/103-1 - to the relocated application or application state at the t_AS 152.

Figure 2 illustrates an embodiment of the method according to the present invention. The method comprises providing the information server 120 realized by an apparatus, a computer platform and a data storage unit including a program code wherein the apparatus comprises at least:
1. a communication interfaces unit which is configured to receive communication messages from and transmit communication messages to at least one application server of the plurality of applications servers and/or the network control plane of the mobile network, particularly to a core network device of the network control plane CND-C 104,
2. an obtaining unit which is configured to retrieve a closest application server of the plurality of application servers from a network topology repository stored in the at least one data storage unit wherein the network topology repository stores respective network topology relationships between respective application servers and respective mobility anchors of the user plane wherein the closest application server is determined from the plurality of application servers on the basis of the respective network topology relationships between the respective application servers and a respectively current mobility anchor of the given user network session,
3. a determining unit which is configured to recognize a change of the relationship between the closest application server and the respectively current mobility anchor of the user network session in the user plane via the means of a network session repository stored in the at least one data storage unit, wherein the network session repository stores a relationship between an unambiguous user network session identifier, defined by a user network session address (UE_IP) and a mobility anchor identifier of the respectively current mobility anchor, and the closest application server, and, in the case of a change, to trigger an application server handover,
wherein the computer platform and the at least one data storage unit including the program code are arranged and interrelated with the apparatus to cause the apparatus to perform the functions of the obtaining unit and the determining unit when the program code is executed by the computer platform.

According to the proposed method, there is provided a communication method for the CND-C 104 to provide the network context of a user network session, defined by a user network session address UE_IP and a mobility anchor identifier MA-Id (UE_IP, MA-Id) and a unique network equipment identifier CND-U-Id of the user plane node associated with the mobility anchor MA, to the information server 120 and obtain the closest application server AS in return. The method includes the following steps:

### Step 201:

The CND-C 104 operates to obtain the network context, given by (UE_IP, MA-Id) and the unique equipment identifier CND-U-Id of the respective CND-U 102, 103, of the user network session from the mobile network 100 and embed the UE_IP, MA-Id and CND-U-Id into a communication message defined for a request for a closest application server, also called closest_AS request, from CND-C 104 on the CND-C / InfSrv interface via the communication interfaces unit. The CND-C 104 further operates to send to the information server 120 the constructed message via the CND-C/InfSrv interface, i.e. via the communication interfaces unit of the apparatus.

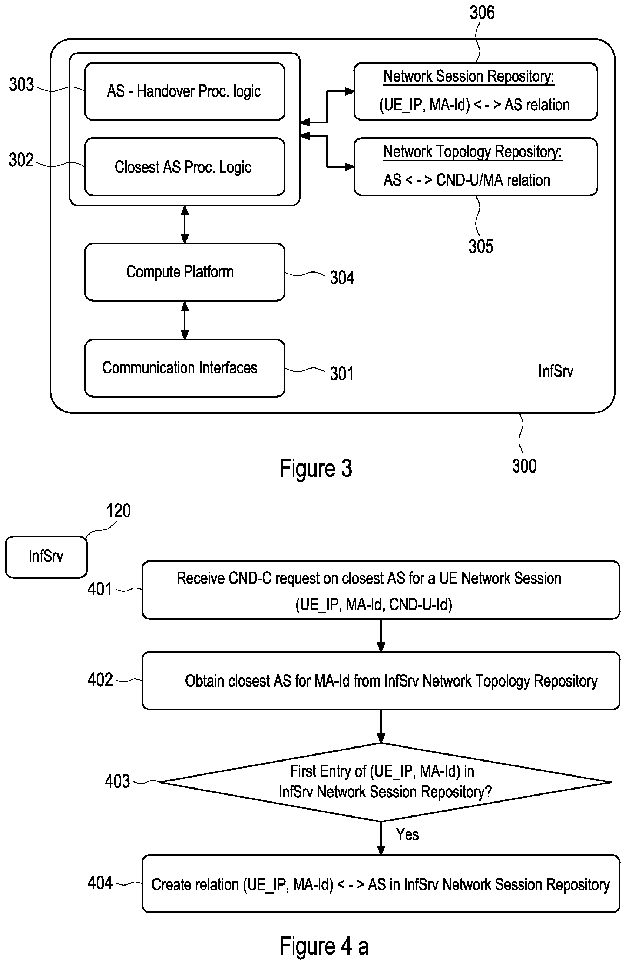

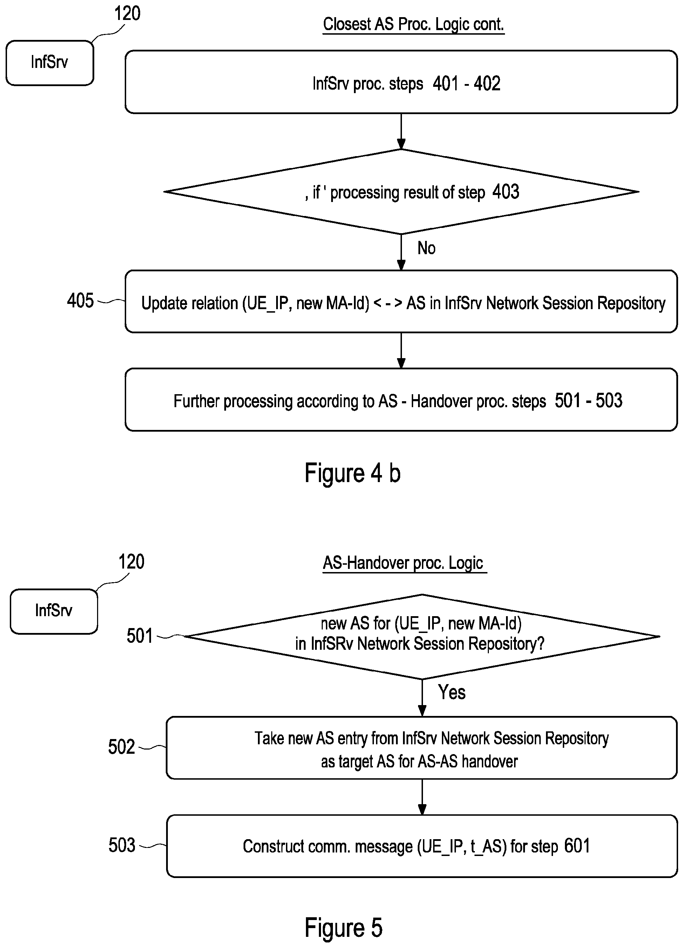

The InfSrv 120 operates to process the steps 401-403 as described in Figure 4 to receive the request from the CND-C 104 and obtain the closest AS.

### Step 202:

The InfSrv 120 operates to return to the CND-C 104 the identifier AS-Id of the closest application server, also called closest_AS, as parameter of a response message defined on the CND-C/InfSrv interface. The closest_AS identifier AS-Id is chosen according to the related art, e.g. as URL/URN (URI), FQDN or IP address.

Figure 3 illustrates an embodiment of the apparatus according to the present invention. The apparatus 300 comprises a communications interface unit 301, an obtaining unit 302 and a determining unit 303. Further the apparatus 300 comprises a computer platform 304 and a program code stored in a data storage unit. "In operative conjunction" means a communicative connection using any suitable communication technology. The computer platform 304 and the program code are used to perform the above mentioned tasks of the obtaining unit 302 and the determining unit 303. Thus, the information server 120 is realized. The obtaining unit 302 is realized by a process logic to find the closest application server, also called here closest AS Proc. Logic, at known network context of a given user network session by means of a network topology repository 305. The network topology repository 305 stores the relationships between a mobility anchor MA located at a CND-U, and an application server AS, in particular, it provides information about the closest application server AS for a given mobility anchor MA. Such relationships are described as: AS ↔ CND-U/MA relation. The determining unit 303 is realized by a process logic, also called here AS-Handover Proc. Logic, to recognize a change of the relation between a user network session, defined by (UE_IP, MA-Id), and the closest application server AS. These relations, described as (UE_IP, MA-Id ↔ AS relation), are managed by the information server 120 via the means of a network session repository 306. Both, the obtaining unit 302 and the determining unit 303 have access to the network topology repository 305 and the network session repository 306, respectively. The terms "relation" and "relationship" are used synonymously herein.

In the following embodiments, closeness and related latency are used only as one example to describe, how an AS can be obtained by the InfSrv 120, this is not to be understood restrictively, but as illustrative.

According to a further embodiment of the proposed method, the InfSrv 120 further operates to determine the closest AS for a user network session being anchored at a CND-U/MA 151, uniquely identified via a respective mobility anchor identifier (MA-Id) and a network equipment identifier (CND-U-Id) of the user plane device associated with the mobility anchor in the mobile network 100. The method includes further the following steps (Figure 4a):

### Step 401:

Receive the closest_AS request from the CND-C on the CND-C / InfSrv interface via the communication interfaces unit 301 for a user network session, also called UE data session. The closest_AS request comprises UE_IP, MA-Id and CND-U-Id.

### Step 402:

Obtain the closest AS, i.e. the identifier AS-Id of the closest AS for the current mobility anchor MA-Id and associated user plane network device with unique network equipment identifier from the network topology repository 305, which is the information structure and potentially data repository that holds a network topology relationship between an application server and a CND-U/MA. As mentioned above, closest relation in terms of shortest latency between an AS and the CND-U/MA is used only as one example to describe the embodiments of the present invention. The CND-U/MA for a given user network session request is identified via the CND-U-Id/MA-Id according to the 3GPP specifications. The CND-U-Id/MA-Id can be used as unambiguous search identifier in the network topology repository 305, also called InfSrv Network Topology Repository, to retrieve the closest AS-Id.

### Step 403:

Determine whether for the given user network session, also called UE network session, identified by the UE_IP address and the MA-Id, there is already an entry in the network session repository 306.

### Step 404:

If there is no entry in the network session repository 306 for the given UE network session then a new entry in the network session repository 306, also called InfSrv Network Session Repository, is created. The new entry holds the relation between the UE network session identified by the UE_IP address and the MA-Id and closest AS identified by the AS-Id. As mentioned earlier, the UE_IP address shall be understood as the source address visible on the external CND-U interface towards the application server.

### Step 405 (Figure 4b):

If there is already an entry in the network session repository 306 for the given UE network session then the UE network session in the mobile network has actually being modified. In case this is being caused by a handover situation in the network which induced the selection of a new CND-U and MA by the CND-C 104, the existing entry in the InfSrv network session repository 306 needs to be updated with the new relation of the UE network session, identified by UE_IP Address and MA-Id, with the closest AS identified by the AS-Id. As a network handover and selection of new MA has been identified, the processing steps for deciding about a. potential handover of the application server as described in Figure 5 will be kicked-off.

Figure 5 illustrates additional steps of a further embodiment of the method . The InfSrv 120 operates to determine that a handover to a target AS can be recommended to a source AS as result of a changed user network session in the mobile network being anchored to a new CND-U/MA and the target AS being closest to the new CND-U/MA. The method includes the following steps:

### Step 501:

Determine whether for the given UE network session, identified by the UE_IP address and the new MA-Id, the closest AS obtained via processing step 402 of the closest_AS method is different from the existing entry of closest AS in the InfSrv network session repository 306.

### Step 502:

In the case the existing entry is to be updated and there is then a new entry for closest AS in the InfSrv network session repository 306, obtain the new AS-Id as the target AS for a AS-AS handover.

### Step 503:

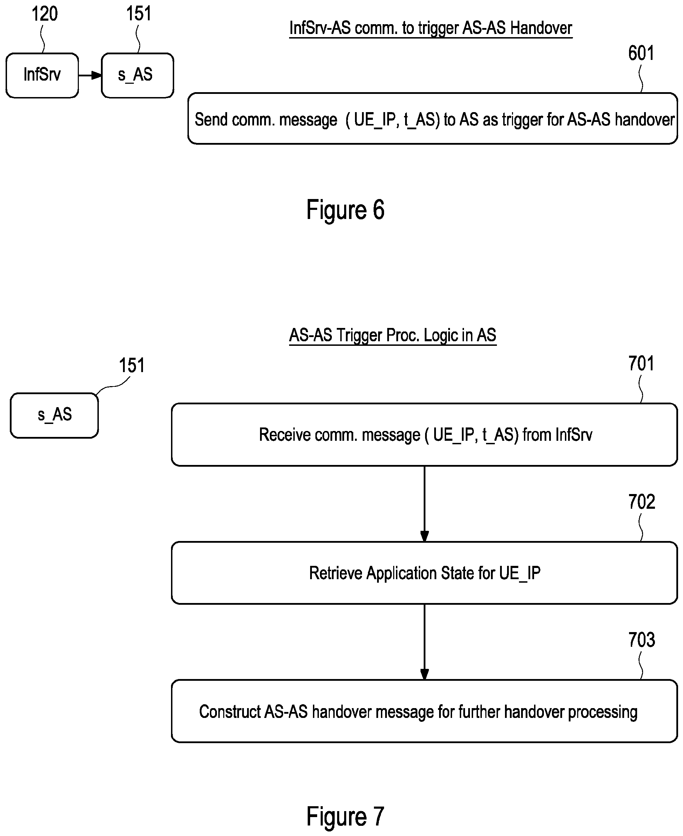

Take the new target AS-Id as trigger to construct a communication message to be conveyed via the InfSrv / AS interface to inform the source application server s_AS that a handover of application or application state to the new AS, i.e. to the target application server t_AS is recommended by the InfSrv 120. Proceed with step 601 as shown in Figure 6 to trigger an AS-AS Handover on the source application server s_AS.

Figure 6 illustrates additional steps of a further embodiment of the method . The InfSrv 120 operates to trigger an AS-AS handover from the source application server s_AS 151 to the target application server t_AS 152 by sending a respective communication message to the s_AS 151 via the InfSrv/AS interface. The method includes the following steps:

### Step 601:

The CND-C 104 operates to send the constructed message from step 503 according to a defined message format for an AS-AS handover trigger message via the InfSrv/AS interface to the source application server s_AS 151.

Figure 7 illustrates additional steps of a further embodiment of the method . The source application server s_AS 151 operates to trigger an AS-AS handover from the source application server s_AS 151 to the target application server t_AS 152. The method includes the following steps:

### Step 701:

Receive the AS-AS Handover trigger message according to the defined message format from the InfSrv 120 via the InfSrv/AS interface.

### Step 702:

Retrieve an application state in the s_AS 151 referenced by the UE_IP address valid for the respective application server. A person of ordinary skill in the art can derive without creative efforts that transferring the application state is one of two alternatives, the other being the relocation of the application as software instance, e.g. a virtual machine or container, from the s_AS 151 to the t_AS 152. For virtual machine relocation any common method of the related art can be chosen.

### Step 703:

Construct a communication message to be conveyed via an interface between the source application server s_AS 151 and the target application server t_AS 152 to inform the t_AS 152 that a handover of application or application state from the s_AS 151, is going to be performed. In all options, session state information can either be transmitted directly between s_AS 151 and t_AS 152 or forwarded by the InfSrv 120, e.g. if the application servers do not have direct connectivity.

The s_AS 151 may be subscribed at the InfSrv 120 to handover relevant information and/or details of the t_AS 152. Otherwise handover relevant information and/or details of the t_AS 152 might be pushed to the s_AS 151 without previous subscription.

### List of reference signs

- 100: mobile network
- 101: network access device NAD
- 102: core network device of user plane CND-U
- 103: core network device of user plane CND-U
- 102-1: mobility anchor
- 103-1: mobility anchor

- 104: core network device of network control plane CND-C
- 110: user equipment
- 120: information server, InfSrv
- 140: arrow
- 141: arrow
- 145: arrow
- 151: source application server, s_AS
- 152: target application server, t_AS
- 201: method steps
- 202: method steps
- 300: apparatus
- 301: communication interfaces unit
- 302: obtaining unit
- 303: determining unit
- 304: computer platform
- 305: network topology table
- 306: dynamic table
- 401 to 405: method steps
- 501 to 503: method steps
- 601: method steps
- 701 to 703: method steps

## Claims

1. System for selecting, for a given user network session in a mobile network (100), an application server (151, 152) among a plurality of application servers (151, 152) in the mobile network (100), the mobile network (100) including a user plane, a network control plane, and a network management plane, **characterized in that** the system is installed and implemented between the network control plane and the plurality of application servers and comprises an apparatus (300) comprising a computer platform (304) and at least one data storage unit including a program code, wherein the apparatus (300) comprises at least:
a) a communication interfaces unit (301) which is configured to receive communication messages from and transmit communication messages to at least one application server of the plurality of applications servers and the control plane of the mobile network,
b) an obtaining unit (302) which is configured to retrieve a closest application server of the plurality of application servers from a network topology repository (305) stored in the at least one data storage unit wherein the network topology repository (305) stores respective network topology specific relationships between respective application servers (151, 152) and respective mobility anchors (102-1, 103-1) of the user plane wherein the closest application server (151, 152) is determined from the plurality of application servers on the basis of the respective network topology specific relationships between the respective application servers and a respectively current mobility anchor of the given user network session,
c) a determining unit (303) which is configured to recognize a change of a relationship between the closest application server (151, 152) and the respectively current mobility anchor (102-1, 103-1) of the user network session in the user plane via the means of a network session repository (306) stored in the at least one data storage unit wherein the network session repository (306) stores a relationship between an unambiguous user network session identifier and the closest application server (151, 152), and, in the case of a change, to trigger an application server handover,
wherein the computer platform (304) and the at least one data storage unit including the program code are arranged and interrelated with the apparatus (300) to cause the apparatus (300) to perform the functions of the obtaining unit (302) and the determining unit (303), when the program code is executed by the computer platform.

2. The system according to claim 1, wherein the application server handover which can be triggered by the determining unit (303) comprises an application state transfer from a source application server (151) of the plurality of application servers to a target application server (152) of the plurality of application servers and/or a relocation of a respective application from the source application server (151) to the target application server (152).

3. The system according to claim 1 or 2, wherein the apparatus (300) is configured to receive a request for a closest application server from the network control plane via the communication interfaces unit (301) and to return an identifier of the closest application server as parameter of a response message to the network control plane of the mobile network via the communication interfaces unit (301) wherein the identifier of the closest application server is retrieved from the network topology repository (305) and wherein the request for the closest application server comprises a user network session address and a mobility anchor identifier of a respectively current mobility anchor (102-1, 103-1) of the given user network session as network context of the user network session, and a unique equipment identifier of a user plane network device (102, 103) associated with the mobility anchor (102-1, 103-1).

4. The system according to claim 3, wherein the apparatus (300) is further configured to determine, using the determining unit (303), for the unambiguous user network session identifier, defined by the user network session address, UE_IP, and the mobility anchor identifier, MA-Id, of the respectively current mobility anchor of the given user network session, whether there is already an entry in the network session repository (306).

5. The system according to claim 4, wherein the apparatus (300) is configured, if there is no entry in the network session repository (306) for the given user network session, to initially create a new entry in the network session repository (306) for the user network session established in the mobile network, the network session repository (306) holding a relationship between the unambiguous user network session identifier, defined by the user network session address, UE_IP, and the mobility anchor identifier, MA-Id, of the respectively current mobility anchor of the given user network session, and a respectively current closest application server identified by an application server identifier.

6. The system according to claim 4 wherein the apparatus (300) is configured, in the case that there exists already an entry in the network session repository (306) for the given user network session and that the given user network session is actually being modified caused by a handover situation with change of mobility anchor (102-1, 103-1) in the mobile network, to update the existing entry into an updated new entry with a new relationship of the modified user network session identified by the user network session address, UE_IP, and the respectively current mobility anchor identifier, MA-Id, with the respectively current closest application server identified by an application server identifier.

7. The system according to claim 6, wherein the apparatus (300) is configured to determine, using the determining unit (303), whether for the given user network session identified by the user network session address, UE_IP, and the new mobility anchor identifier, MA-Id, the closest application server obtained from the network topology repository (305) is different from the existing entry of the closest application server as source application server (151) in the network session repository (306), to obtain an application server identifier of the closest application server from the updated new entry in the network session repository (306) as target application server (152) for the application server handover and to take the application server identifier of the target application server (152) as trigger to construct a communication message to be conveyed via the communication interfaces unit (301) to inform the source application server (151) that a handover of application or application state to the target application server (152) is recommended.

8. The system according to claim 7 wherein the apparatus (300) is configured to trigger, using the determining unit (303), an application server handover from the source application server (151) to the target application server (152) by sending the constructed communication message via the communication interfaces unit (301) to the source application server (151), the communication message having a message format defined for an application server handover trigger message.

9. The system according to claim 8 wherein the source application server (151) is part of the system and is configured to receive a control message about an envisaged application server handover from the source application server (151) to the target application server (152).

10. Method for selecting, for a given user network session in a mobile network, an application server among a plurality of application servers in the mobile network, the mobile network including a user plane, a network control plane, and a network management plane, **characterized in that** the method comprises at least the following steps:
A) providing an apparatus, a computer platform and a data storage unit including a program code, wherein the apparatus, the computer platform and the program code form an information server that is installed and implemented between the network control plane and the plurality of application servers , wherein:
1) a communication interfaces unit receives communication messages from and transmits communication messages to at least one application server of the plurality of applications servers and/or the control plane of the mobile network,
2) an obtaining unit retrieves a closest application server of the plurality of application servers from a network topology repository stored in the at least one data storage unit wherein the network topology repository stores respective network topology specific relationships between respective application servers and respective mobility anchors of the user plane wherein the closest application server is determined from the plurality of application servers on the basis of the respective network topology specific relationships between the respective application servers and a respectively current mobility anchor of the given user network session,
3) a determining unit recognizes a change of a relationship between the closest application server and the respectively current mobility anchor of the user network session in the user plane via the means of a network session repository stored in the at least one data storage unit, wherein the network session repository (306) stores a relationship between an unambiguous user network session identifier and the closest application server and, in the case of a change, triggers an application server handover,
wherein the computer platform and the at least one data storage unit including the program code are arranged and interrelated with the apparatus to cause the apparatus to perform the functions of the obtaining unit and the determining unit when the program code is executed by the computer platform;
B) obtaining via the network control plane a user network session address, UE_IP and a mobility anchor identifier, MA-Id, of a respectively current mobility anchor for the given user network session as network context of the user network session, and a unique equipment identifier, CNC-U-Id, of the user plane network node associated with the respectively current mobility anchor,
C) embedding at the network control plane the user network session address, UE_IP, and the mobility anchor identifier, MA-Id, and the unique equipment identifier, CNC-U-Id, of the user plane network device associated with the respectively current mobility anchor into a communication message defined for a network request for a closest application server,
D) sending the network request for the closest application server to the apparatus,
E) receiving at the apparatus the request for the closest application server from the network control plane via the communication interfaces unit,
F) returning an identifier of the closest application server as parameter of a response message to the control plane via the communication interfaces unit wherein the identifier of the closest application server is retrieved from the network topology repository.

11. The method according to claim 10, further comprising:
G) determining, using the determining unit, whether for the given user network session identified by the user network session address and the respectively current mobility anchor identifier, the closest application server obtained from the network topology repository is different from an existing entry of the closest application server as source application server in the network session repository, and in the case that the closest application server is different,
H) obtaining a new application server identifier of the closest application server from an updated new entry in the network session repository as target application server for the application server handover, and
I) constructing, triggered by the new application server identifier of the target application server, a communication message to be conveyed via the communication interfaces unit to inform the source application server that a handover of application or application state to the target application server is recommended,
J) sending the constructed communication message together with handover information and details of the target application server to the source application server via the communication interfaces unit.

12. The method according to claim 11, further comprising:
K) receiving at the source application server the constructed communication message via the communication interfaces unit and constructing and sending a communication message to the target application server to inform the target application server that a handover from the source application server is going to be performed, wherein in the case of an application state handover the application state for the given user network session being retrieved via the user network session address UE_IP and embedded as conveyable information element into the communication message to the target server.

13. A computer program product comprising a set of instructions which, when executed on at least one computing device, is configured to cause the at least one computing device to carry out the method according to any one of claims 10 to 12.

14. The computer program product according to claim 13, embodied as a computer-readable medium or directly loaded into a computer.

## Patentansprüche

1. System zum Auswählen eines Anwendungsservers (151, 152) für eine gegebene Benutzernetzwerksitzung in einem mobilen Netzwerk (100) aus einer Mehrzahl von Anwendungsservern (151, 152) in dem mobilen Netzwerk (100), wobei das mobile Netzwerk (100) eine Benutzerebene, eine Netzwerksteuerebene und eine Netzwerkverwaltungsebene umfasst, **dadurch gekennzeichnet, dass** das System zwischen der Netzwerksteuerebene und der Mehrzahl von Anwendungsservern installiert und implementiert ist und eine Vorrichtung (300) umfasst, die eine Computerplattform (304) und mindestens eine Datenspeichereinheit, die einen Programmcode beinhaltet, umfasst, wobei die Vorrichtung (300) mindestens Folgendes umfasst:
a) eine Kommunikationsschnittstelleneinheit (301), die dazu konfiguriert ist, Kommunikationsnachrichten von mindestens einem Anwendungsserver der Mehrzahl von Anwendungsservern und von der Steuerebene des Mobilfunknetzes zu empfangen und an dieselben zu senden,
b) eine Erfassungseinheit (302), die dazu konfiguriert ist, einen nächstgelegenen Anwendungsserver aus der Mehrzahl von Anwendungsservern aus einem Netzwerktopologie-Repository (305) abzurufen, das in der mindestens einen Datenspeichereinheit gespeichert ist, wobei das Netzwerktopologie-Repository (305) jeweilige netzwerktopologiespezifische Beziehungen zwischen jeweiligen Anwendungsservern (151, 152) und jeweiligen Mobilitätsankern (102-1, 103-1) der Benutzerebene speichert, wobei der nächstgelegene Anwendungsserver (151, 152) aus der Mehrzahl von Anwendungsservern auf der Grundlage der jeweiligen netzwerktopologiespezifischen Beziehungen zwischen den jeweiligen Anwendungsservern und einem jeweils aktuellen Mobilitätsanker der gegebenen Benutzernetzwerksitzung bestimmt wird,
c) eine Bestimmungseinheit (303), die dazu konfiguriert ist, eine Änderung einer Beziehung zwischen dem nächstgelegenen Anwendungsserver (151, 152) und dem jeweils aktuellen Mobilitätsanker (102-1, 103-1) der Benutzernetzwerksitzung in der Benutzerebene mittels eines Netzwerksitzungs-Repositorys (306), das in der mindestens einen Datenspeichereinheit gespeichert ist, zu erkennen, wobei das Netzwerksitzungs-Repository (306) eine Beziehung zwischen einer eindeutigen Benutzernetzwerksitzungskennung und dem nächstgelegenen Anwendungsserver (151, 152) speichert, und im Falle einer Änderung eine Übergabe des Anwendungsservers auszulösen,
wobei die Computerplattform (304) und die mindestens eine Datenspeichereinheit, die den Programmcode beinhaltet, so angeordnet und mit der Vorrichtung (300) verbunden sind, dass die Vorrichtung (300) dazu veranlasst wird, die Funktionen der Erfassungseinheit (302) und der Bestimmungseinheit (303) auszuführen, wenn der Programmcode von der Computerplattform ausgeführt wird.

2. System nach Anspruch 1, wobei die Übergabe des Anwendungsservers, die von der Bestimmungseinheit (303) ausgelöst werden kann, eine Übertragung des Anwendungsstatus von einem Quellanwendungsserver (151) der Mehrzahl von Anwendungsservern zu einem Zielanwendungsserver (152) der Mehrzahl von Anwendungsservern und/oder eine Relokation einer jeweiligen Anwendung von dem Quellanwendungsserver (151) zu dem Zielanwendungsserver (152) umfasst.

3. System nach Anspruch 1 oder 2, wobei die Vorrichtung (300) dazu konfiguriert ist, eine Anfrage nach einem nächstgelegenen Anwendungsserver von der Netzwerksteuerebene über die Kommunikationsschnittstelleneinheit (301) zu empfangen und eine Kennung des nächstgelegenen Anwendungsservers als Parameter einer Antwortnachricht an die Netzwerksteuerebene des mobilen Netzwerks über die Kommunikationsschnittstelleneinheit (301) zurückzugeben, wobei die Kennung des nächstgelegenen Anwendungsservers aus dem Netzwerktopologie-Repository (305) abgerufen wird und wobei die Anfrage nach dem nächstgelegenen Anwendungsserver eine Benutzernetzwerksitzungsadresse und eine Mobilitätsankerkennung eines jeweils aktuellen Mobilitätsankers (102-1, 103-1) der gegebenen Benutzernetzwerksitzung als Netzwerkkontext der Benutzernetzwerksitzung und eine eindeutige Gerätekennung eines mit dem Mobilitätsanker (102-1, 103-1) assoziierten Benutzerebenen-Netzwerkgeräts (102, 103) umfasst.

4. System nach Anspruch 3, wobei die Vorrichtung (300) ferner dazu konfiguriert ist, unter Verwendung der Bestimmungseinheit (303) für die eindeutige Benutzernetzsitzungskennung, die durch die Benutzernetzsitzungsadresse UE_IP und die Mobilitätsankerkennung MA-Id des jeweils aktuellen Mobilitätsankers der gegebenen Benutzernetzsitzung definiert ist, zu bestimmen, ob bereits ein Eintrag im Netzwerksitzungs-Repository (306) vorhanden ist.

5. System nach Anspruch 4, wobei die Vorrichtung (300) dazu konfiguriert ist, wenn kein Eintrag in dem Netzwerksitzungs-Repository (306) für die gegebene Benutzernetzwerksitzung vorhanden ist, zunächst einen neuen Eintrag in dem Netzwerksitzungs-Repository (306) für die in dem mobilen Netzwerk eingerichtete Benutzernetzwerksitzung zu erzeugen, wobei das Netzwerksitzungs-Repository (306) eine Beziehung zwischen der eindeutigen Benutzernetzwerksitzungskennung, die durch die Benutzernetzwerksitzungsadresse UE_IP und die Mobilitätsankerkennung MA-Id des jeweils aktuellen Mobilitätsankers der gegebenen Benutzernetzwerksitzung definiert ist, und einem jeweils aktuellen nächstgelegenen Anwendungsserver, der durch eine Anwendungsserverkennung identifiziert wird, enthält.

6. System nach Anspruch 4, wobei die Vorrichtung (300) für den Fall, dass bereits ein Eintrag im Netzwerksitzungs-Repository (306) für die gegebene Benutzernetzwerksitzung existiert und dass die gegebene Benutzernetzwerksitzung aktuell durch eine Übergabe-Situation mit Änderung des Mobilitätsankers (102-1, 103-1) im mobilen Netzwerk modifiziert wird, dazu konfiguriert ist, den bestehenden Eintrag in einen aktualisierten neuen Eintrag mit einer neuen Beziehung der modifizierten Benutzernetzwerksitzung, die durch die Benutzernetzwerksitzungsadresse UE IP und die jeweils aktuelle Mobilitätsankerkennung, MA-Id identifiziert wird, mit dem jeweils aktuellen nächstgelegenen Anwendungsserver, der durch eine Anwendungsserverkennung identifiziert wird, zu aktualisieren.

7. System nach Anspruch 6, wobei die Vorrichtung (300) dazu konfiguriert ist, unter Verwendung der Bestimmungseinheit (303) zu bestimmen, ob für die gegebene Benutzernetzwerksitzung, die durch die Benutzernetzwerksitzungsadresse UE_IP und die neue Mobilitätsankerkennung MA-Id identifiziert wird, der nächstgelegene Anwendungsserver, der aus dem Netzwerktopologie-Repository (305) erhalten wird, sich von dem bestehenden Eintrag des nächstgelegenen Anwendungsservers als Quellanwendungsserver (151) im Netzwerksitzungs-Repository (306) unterscheidet, eine Anwendungsserverkennung des nächstgelegenen Anwendungsservers aus dem aktualisierten neuen Eintrag im Netzwerksitzungs-Repository (306) als Zielanwendungsserver (152) für die Übergabe des Anwendungsservers zu erhalten, und die Anwendungsserverkennung des Zielanwendungsservers (152) als Auslöser zu nehmen, um eine Kommunikationsnachricht zu konstruieren, die über die Kommunikationsschnittstelleneinheit (301) zu übermitteln ist, um den Quellanwendungsserver (151) zu informieren, dass eine Übergabe der Anwendung oder des Anwendungsstatus an den Zielanwendungsserver (152) empfohlen wird.

8. System nach Anspruch 7, wobei die Vorrichtung (300) dazu konfiguriert ist, unter Verwendung der Bestimmungseinheit (303) eine Übergabe des Anwendungsservers von dem Quellanwendungsserver (151) an den Zielanwendungsserver (152) durch Senden der konstruierten Kommunikationsnachricht über die Kommunikationsschnittstelleneinheit (301) an den Quellanwendungsserver (151) auszulösen, wobei die Kommunikationsnachricht ein Nachrichtenformat aufweist, das für eine Nachricht für das Auslösen einer Übergabe des Anwendungsservers definiert ist.

9. System nach Anspruch 8, wobei der Quellanwendungsserver (151) Teil des Systems ist und dazu konfiguriert ist, eine Kontrollnachricht über eine geplante Übergabe des Anwendungsservers von dem Quellanwendungsserver (151) an den Zielanwendungsserver (152) zu empfangen.

10. Verfahren zum Auswählen eines Anwendungsservers für eine gegebene Benutzernetzwerksitzung in einem mobilen Netzwerk aus einer Mehrzahl von Anwendungsservern, wobei das mobile Netzwerk eine Benutzerebene, eine Netzwerksteuerebene und eine Netzwerkverwaltungsebene umfasst, **dadurch gekennzeichnet, dass** das Verfahren mindestens die folgenden Schritte umfasst:
A) Bereitstellen einer Vorrichtung, einer Computerplattform und einer Datenspeichereinheit, die einen Programmcode beinhaltet, wobei die Vorrichtung, die Computerplattform und der Programmcode einen Informationsserver bilden, der zwischen der Netzwerksteuerebene und der Mehrzahl von Anwendungsservern installiert und implementiert ist, wobei:
1) eine Kommunikationsschnittstelleneinheit Kommunikationsnachrichten von mindestens einem Anwendungsserver der Mehrzahl von Anwendungsservern und/oder von der Steuerebene des Mobilfunknetzes empfängt und an dieselben sendet,
2) eine Erfassungseinheit einen nächstgelegenen Anwendungsserver aus der Mehrzahl von Anwendungsservern aus einem Netzwerktopologie-Repository abruft, das in der mindestens einen Datenspeichereinheit gespeichert ist, wobei das Netzwerktopologie-Repository jeweilige netzwerktopologiespezifische Beziehungen zwischen jeweiligen Anwendungsservern und jeweiligen Mobilitätsankern der Benutzerebene speichert, wobei der nächstgelegene Anwendungsserver aus der Mehrzahl von Anwendungsservern auf der Grundlage der jeweiligen netzwerktopologiespezifischen Beziehungen zwischen den jeweiligen Anwendungsservern und einem jeweils aktuellen Mobilitätsanker der gegebenen Benutzernetzwerksitzung bestimmt wird,
3) eine Bestimmungseinheit eine Änderung einer Beziehung zwischen dem nächstgelegenen Anwendungsserver und dem jeweils aktuellen Mobilitätsanker der Benutzernetzwerksitzung in der Benutzerebene mittels eines Netzwerksitzungs-Repositorys, das in der mindestens einen Datenspeichereinheit gespeichert ist, erkennt, wobei das Netzwerksitzungs-Repository (306) eine Beziehung zwischen einer eindeutigen Benutzernetzwerksitzungskennung und dem nächstgelegenen Anwendungsserver speichert, und im Falle einer Änderung eine Übergabe des Anwendungsservers auslöst,
wobei die Computerplattform und die mindestens eine Datenspeichereinheit, die den Programmcode beinhaltet, so angeordnet und mit der Vorrichtung verbunden sind, dass die Vorrichtung dazu veranlasst wird, die Funktionen der Erfassungseinheit und der Bestimmungseinheit auszuführen, wenn der Programmcode von der Computerplattform ausgeführt wird,
B) Erhalten, über die Netzwerksteuerebene, einer Benutzernetzsitzungsadresse UE_IP und einer Mobilitätsankerkennung MA-Id eines jeweils aktuellen Mobilitätsankers für die gegebene Benutzernetzwerksitzung als Netzwerkkontext der Benutzernetzwerksitzung und einer eindeutigen Gerätekennung CNC-U-Id des Netzwerkknotens der Benutzerebene, der mit dem jeweils aktuellen Mobilitätsanker assoziiert ist,
C) Einbetten, in der Netzwerksteuerebene, der Benutzernetzwerksitzungsadresse UE_IP und der Mobilitätsankerkennung MA-Id und der eindeutigen Gerätekennung CNC-U-Id des Netzwerkgeräts der Benutzerebene, das mit dem jeweils aktuellen Mobilitätsanker assoziiert ist, in eine Kommunikationsnachricht, die für eine Netzwerkanfrage nach einem nächstgelegenen Anwendungsserver definiert ist,
D) Senden der Netzwerkanfrage nach dem nächstgelegenen Anwendungsserver an die Vorrichtung,
E) Empfangen, in der Vorrichtung, der Anfrage nach dem nächstgelegenen Anwendungsserver von der Netzwerksteuerebene über die Kommunikationsschnittstelleneinheit,
F) Rückgabe einer Kennung des nächstgelegenen Anwendungsservers als Parameter einer Antwortnachricht an die Steuerebene über die Kommunikationsschnittstelleneinheit, wobei die Kennung des nächstgelegenen Anwendungsservers aus dem Netzwerktopologie-Repository abgerufen wird.

11. Verfahren nach Anspruch 10, ferner umfassend:
G) Bestimmen, unter Verwendung der Bestimmungseinheit, ob für die gegebene durch die Benutzernetzwerksitzungsadresse und die jeweils aktuelle Mobilitätsankerkennung identifizierte Benutzernetzwerksitzung der nächstgelegene Anwendungsserver, der aus dem Netzwerktopologie-Repository erhalten wird, sich von einem bestehenden Eintrag des nächstgelegenen Anwendungsservers als Quellanwendungsserver im Netzwerksitzungs-Repository unterscheidet, und für den Fall, dass der nächstgelegene Anwendungsserver sich unterscheidet,
H) Erhalten einer neuen Anwendungsserverkennung des nächstgelegenen Anwendungsservers aus einem aktualisierten neuen Eintrag im Netzwerksitzungs-Repository als Zielanwendungsserver für die Übergabe des Anwendungsservers, und
I) Konstruieren, ausgelöst durch die neue Anwendungsserverkennung des Zielanwendungsservers, einer Kommunikationsnachricht, die über die Kommunikationsschnittstelleneinheit übermittelt werden soll, um den Quellanwendungsserver zu informieren, dass eine Übergabe der Anwendung oder des Anwendungsstatus an den Zielanwendungsserver empfohlen wird,
J) Senden der konstruierten Kommunikationsnachricht zusammen mit Übergabeinformationen und Details des Zielanwendungsservers an den Quellanwendungsserver über die Kommunikationsschnittstelleneinheit.

12. Verfahren nach Anspruch 11, ferner umfassend:
K) Empfangen, am Quellanwendungsserver, der konstruierten Kommunikationsnachricht über die Kommunikationsschnittstelleneinheit und Konstruieren und Senden einer Kommunikationsnachricht an den Zielanwendungsserver, um den Zielanwendungsserver darüber zu informieren, dass eine Übergabe vom Quellanwendungsserver durchgeführt werden wird, wobei im Fall einer Übergabe des Anwendungsstatus der Anwendungsstatus für die gegebene Benutzernetzwerksitzung über die Benutzernetzwerksitzungsadresse UE_IP abgerufen und als vermittelbares Informationselement in die Kommunikationsnachricht an den Zielserver eingebettet wird.

13. Computerprogrammprodukt, das einen Satz von Anweisungen enthält, die, wenn sie auf mindestens einem Computergerät ausgeführt werden, dazu konfiguriert sind, das mindestens eine Computergerät zu veranlassen, das Verfahren nach einem der Ansprüche 10 bis 12 auszuführen.

14. Computerprogrammprodukt nach Anspruch 13, verkörpert als computerlesbares Medium oder direkt in einen Computer geladen.

## Revendications

1. Système permettant de sélectionner, pour une session de réseau d'utilisateur donnée dans un réseau mobile (100), un serveur d'application (151, 152) parmi une pluralité de serveurs d'application (151, 152) dans le réseau mobile (100), le réseau mobile (100) comportant un plan d'utilisateur, un plan de commande de réseau et un plan de gestion de réseau, **caractérisé en ce que** le système est installé et mis en œuvre entre le plan de commande de réseau et la pluralité de serveurs d'application et comprend un appareil (300) comprenant une plateforme informatique (304) et au moins une unité de stockage de données comportant un code de programme, l'appareil (300) comprenant au moins :
a) une unité d'interfaces de communication (301) qui est configurée pour recevoir des messages de communication depuis au moins un serveur d'application de la pluralité de serveurs d'application et le plan de contrôle du réseau mobile et pour transmettre des messages de communication à ceux-ci,
b) une unité d'obtention (302) qui est configurée pour récupérer un serveur d'application le plus proche de la pluralité de serveurs d'application d'un référentiel de topologie de réseau (305) stocké dans la au moins une unité de stockage de données, le référentiel de topologie de réseau (305) stockant des relations spécifiques de topologie de réseau respectives entre des serveurs d'application respectifs (151, 152) et des ancres de mobilité respectives (102-1, 103-1) du plan utilisateur, le serveur d'application le plus proche (151, 152) étant déterminé parmi la pluralité de serveurs d'application sur la base des relations spécifiques de topologie de réseau respectives entre les serveurs d'application respectifs et une ancre de mobilité respectivement actuelle de la session de réseau d'utilisateur donnée,
c) une unité de détermination (303) qui est configurée pour reconnaître un changement d'une relation entre le serveur d'application le plus proche (151, 152) et l'ancre de mobilité respectivement actuelle (102-1, 103-1) de la session de réseau d'utilisateur dans le plan d'utilisateur par l'intermédiaire d'un référentiel de session de réseau (306) stocké dans la au moins une unité de stockage de données, le référentiel de session de réseau (306) stockant une relation entre un identificateur de session de réseau d'utilisateur non ambigu et le serveur d'application le plus proche (151, 152), et, dans le cas d'un changement, pour déclencher un transfert de serveur d'application,
la plateforme informatique (304) et la au moins une unité de stockage de données comprenant le code de programme étant agencées et interreliées à l'appareil (300) pour amener celui-ci à exécuter les fonctions de l'unité d'obtention (302) et de l'unité de détermination (303), lorsque le code de programme est exécuté par la plateforme informatique.

2. Système selon la revendication 1, le transfert de serveur d'application qui peut être déclenché par l'unité de détermination (303) comprenant un transfert d'état d'application depuis un serveur d'application source (151) de la pluralité de serveurs d'application à un serveur d'application cible (152) de la pluralité de serveurs d'application et/ou une relocalisation d'une application respective depuis le serveur d'application source (151) au serveur d'application cible (152).

3. Système selon la revendication 1 ou 2, l'appareil (300) étant configuré pour recevoir une demande d'un serveur d'application le plus proche depuis le plan de commande de réseau par l'intermédiaire de l'unité d'interfaces de communication (301) et pour renvoyer un identificateur du serveur d'application le plus proche en tant que paramètre d'un message de réponse au plan de commande de réseau du réseau mobile par l'intermédiaire de l'unité d'interfaces de communication (301), l'identificateur du serveur d'application le plus proche étant récupéré depuis le référentiel de topologie de réseau (305) et la demande du serveur d'application le plus proche comprenant une adresse de session de réseau d'utilisateur et un identificateur d'ancre de mobilité d'une ancre de mobilité respectivement actuelle (102-1, 103-1) de la session de réseau d'utilisateur donnée en tant que contexte de réseau de la session de réseau d'utilisateur, et un identificateur d'équipement unique d'un dispositif de réseau de plan d'utilisateur (102, 103) associé à l'ancre de mobilité (102-1, 103-1).

4. Système selon la revendication 3, l'appareil (300) étant en outre configuré pour déterminer, à l'aide de l'unité de détermination (303), pour l'identificateur de session de réseau d'utilisateur non ambigu, défini par l'adresse de session de réseau d'utilisateur, UE_IP, et l'identificateur d'ancre de mobilité, MA-Id, de l'ancre de mobilité respectivement actuelle de la session de réseau d'utilisateur donnée, s'il existe déjà une entrée dans le référentiel de session de réseau (306).

5. Système selon la revendication 4, l'appareil (300) étant configuré, s'il n'y a pas d'entrée dans le référentiel de session de réseau (306) pour la session de réseau d'utilisateur donnée, pour créer initialement une nouvelle entrée dans le référentiel de session de réseau (306) pour la session de réseau d'utilisateur établie dans le réseau mobile, le référentiel de session de réseau (306) conservant une relation entre l'identificateur de session de réseau d'utilisateur non ambigu, défini par l'adresse de session de réseau d'utilisateur, UE_IP, et l'identificateur d'ancre de mobilité, MA-Id, de l'ancre de mobilité respectivement actuelle de la session de réseau d'utilisateur donnée, et un serveur d'application le plus proche respectivement actuel identifié par un identificateur de serveur d'application.

6. Système selon la revendication 4, l'appareil (300) étant configuré, au cas où il existe déjà une entrée dans le référentiel de session de réseau (306) pour la session de réseau d'utilisateur donnée et que la session de réseau d'utilisateur donnée est en fait modifiée en raison d'une situation de transfert avec changement d'ancre de mobilité (102-1, 103-1) dans le réseau mobile, pour mettre à jour l'entrée existante vers une nouvelle entrée mise à jour avec une nouvelle relation de la session de réseau d'utilisateur modifiée identifiée par l'adresse de session de réseau d'utilisateur, UE_IP, et l'identificateur d'ancre de mobilité respectivement actuel, MA-Id, avec le serveur d'application le plus proche respectivement actuel identifié par un identificateur de serveur d'application.

7. Système selon la revendication 6, l'appareil (300) étant configuré pour déterminer, à l'aide de l'unité de détermination (303), si pour la session de réseau d'utilisateur donnée identifiée par l'adresse de session de réseau d'utilisateur, UE IP, et le nouvel identificateur d'ancre de mobilité, MA-Id, le serveur d'application le plus proche obtenu du référentiel de topologie de réseau (305) est différent de l'entrée existante du serveur d'application le plus proche en tant que serveur d'application source (151) dans le référentiel de session de réseau (306), pour obtenir un identificateur de serveur d'application du serveur d'application le plus proche depuis la nouvelle entrée mise à jour dans le référentiel de session de réseau (306) en tant que serveur d'application cible (152) pour le transfert de serveur d'application et pour prendre l'identificateur de serveur d'application du serveur d'application cible (152) en tant que déclencheur pour construire un message de communication à transmettre par l'intermédiaire de l'unité d'interfaces de communication (301) pour informer le serveur d'application source (151) qu'un transfert d'application ou d'état d'application au serveur d'application cible (152) est recommandé.

8. Système selon la revendication 7, l'appareil (300) étant configuré pour déclencher, à l'aide de l'unité de détermination (303), un transfert de serveur d'application du serveur d'application source (151) au serveur d'application cible (152) en envoyant le message de communication construit, au moyen de l'unité d'interfaces de communication (301), au serveur d'application source (151), le message de communication ayant un format de message défini pour un message de déclenchement de transfert de serveur d'application.

9. Système selon la revendication 8, le serveur d'application source (151) faisant partie du système et étant configuré pour recevoir un message de commande concernant un transfert de serveur d'application envisagé du serveur d'application source (151) au serveur d'application cible (152).

10. Procédé de sélection, pour une session de réseau d'utilisateur donnée dans un réseau mobile, d'un serveur d'application parmi une pluralité de serveurs d'application dans le réseau mobile, le réseau mobile comprenant un plan d'utilisateur, un plan de commande de réseau, et un plan de gestion de réseau, **caractérisé en ce que** le procédé comprend au moins les étapes suivantes :
A) fournir un appareil, une plateforme informatique et une unité de stockage de données comprenant un code de programme, l'appareil, la plateforme informatique et le code de programme formant un serveur d'informations qui est installé et mis en œuvre entre le plan de commande du réseau et la pluralité de serveurs d'application :
1) une unité d'interfaces de communication recevant des messages de communication d'au moins un serveur d'application de la pluralité de serveurs d'application et/ou du plan de commande du réseau mobile et transmettant des messages de communication à ceux-ci,
2) une unité d'obtention récupérant un serveur d'application le plus proche de la pluralité de serveurs d'application d'un référentiel de topologie de réseau stocké dans la au moins une unité de stockage de données, le référentiel de topologie de réseau stockant des relations spécifiques de topologie de réseau respectives entre des serveurs d'application respectifs et des ancres de mobilité respectives du plan utilisateur, le serveur d'application le plus proche étant déterminé parmi la pluralité de serveurs d'application sur la base des relations spécifiques de topologie de réseau respectives entre les serveurs d'application respectifs et une ancre de mobilité respectivement actuelle de la session de réseau d'utilisateur donnée,
3) une unité de détermination reconnaissant un changement d'une relation entre le serveur d'application le plus proche et l'ancre de mobilité respectivement actuelle de la session de réseau d'utilisateur dans le plan d'utilisateur par l'intermédiaire d'un référentiel de session de réseau stocké dans la au moins une unité de stockage de données, le référentiel de session de réseau stockant une relation entre un identifiant de session de réseau d'utilisateur non ambigu et le serveur d'application le plus proche, et, dans le cas d'un changement, déclenchant un transfert de serveur d'application,
la plateforme informatique et la au moins une unité de stockage de données comprenant le code de programme étant agencées et interreliées à l'appareil pour amener celui-ci à exécuter les fonctions de l'unité d'obtention et de l'unité de détermination lorsque le code de programme est exécuté par la plateforme informatique ;
B) obtenir par l'intermédiaire du plan de commande du réseau une adresse de session de réseau d'utilisateur, UE_IP et un identificateur d'ancre de mobilité, MA-Id, d'une ancre de mobilité respectivement actuelle pour la session de réseau d'utilisateur donnée en tant que contexte de réseau de la session de réseau d'utilisateur, et un identificateur d'équipement unique, CNC-U-Id, du nœud de réseau du plan d'utilisateur associé à l'ancre de mobilité respectivement actuelle,
C) intégrer au niveau du plan de commande du réseau l'adresse de session de réseau d'utilisateur, UE_IP, et l'identifiant d'ancre de mobilité, MA-Id, et l'identificateur d'équipement unique, CNC-U-Id, du dispositif de réseau du plan d'utilisateur associé à l'ancre de mobilité respectivement actuelle dans un message de communication défini pour une demande de réseau pour un serveur d'application le plus proche,
D) envoyer la demande de réseau du serveur d'application le plus proche à l'appareil,
E) recevoir au niveau de l'appareil la demande du serveur d'application le plus proche en provenance du plan de commande du réseau par l'intermédiaire de l'unité d'interfaces de communication,
F) renvoyer un identificateur du serveur d'application le plus proche en tant que paramètre d'un message de réponse au plan de commande par l'intermédiaire de l'unité d'interfaces de communication, l'identificateur du serveur d'application le plus proche étant récupéré du référentiel de topologie de réseau.

11. Procédé selon la revendication 10, comprenant en outre :
G) déterminer, à l'aide de l'unité de détermination, si pour la session réseau d'utilisateur donnée identifiée par l'adresse de session réseau d'utilisateur et l'identificateur d'ancrage de mobilité respectivement actuel, le serveur d'application le plus proche obtenu du référentiel de topologie de réseau est différent d'une entrée existante du serveur d'application le plus proche en tant que serveur d'application source dans le référentiel de session réseau, et au cas où le serveur d'application le plus proche est différent,
H) obtenir un nouvel identificateur de serveur d'application du serveur d'application le plus proche d'une nouvelle entrée mise à jour dans le référentiel de session du réseau en tant que serveur d'application cible pour le transfert de serveur d'application, et
I) construire, après déclenchement par le nouvel identificateur de serveur d'application du serveur d'application cible, un message de communication à transmettre par l'intermédiaire de l'unité d'interfaces de communication pour informer le serveur d'application source qu'un transfert d'application ou d'état d'application au serveur d'application cible est recommandé,
J) envoyer le message de communication construit, conjointement avec les informations de transfert et les détails du serveur d'application cible, au serveur d'application source par l'intermédiaire de l'unité d'interfaces de communication.

12. Procédé selon la revendication 11, comprenant en outre :
K) recevoir, au niveau du serveur d'application source le message de communication construit, par l'intermédiaire de l'unité d'interfaces de communication et construire et envoyer un message de communication au serveur d'application cible pour informer le serveur d'application cible qu'un transfert depuis le serveur d'application source va être exécuté, et en cas d'un transfert d'état d'application, l'état d'application pour la session de réseau d'utilisateur donnée étant récupéré par l'intermédiaire de l'adresse de session de réseau d'utilisateur UE_IP et intégré en tant qu'élément d'information transmissible dans le message de communication au serveur cible.

13. Produit de programme informatique comprenant un ensemble d'instructions qui, lorsqu'il est exécuté sur au moins un dispositif informatique, est configuré pour amener le au moins un dispositif informatique à exécuter le procédé selon l'une quelconque des revendications 10 à 12.

14. Produit de programme informatique selon la revendication 13, réalisé sous la forme d'un support lisible par ordinateur ou chargé directement dans un ordinateur.
